# EUROPÄISCHE PATENTSCHRIFT

(11) **EP 2 366 769 B1**
(45) Veröffentlichungstag und Bekanntmachung des Hinweises auf die Patenterteilung: **08.05.2013**
(21) Anmeldenummer: 10155660.3
(22) Anmeldetag: 05.03.2010
(51) Int. Cl.: C11D 7/02, C11D 7/20, C11D 3/12, C11D 17/00, A61C 13/00

(54) **Verwendung einer Reinigungspartikel enthaltenden Zusammensetzung**
Use of a Composition containing cleaning particles
Utilisation d'une composition contenant des particules de nettoyage

(43) Veröffentlichungstag der Anmeldung: 21.09.2011
(73) Patentinhaber: Ivoclar Vivadent AG, 9494 Schaan (LI)
(72) Erfinder: Bock, Thorsten, 6800, Feldkirch (AT); Rheinberger, Volker, 9490, Vaduz (LI); Salz, Ulrich, 88131, Lindau (DE)
(74) Vertreter: UEXKÜLL & STOLBERG

(56) Entgegenhaltungen:
- EP-A1- 1 837 394
- DE-A1- 10 026 868
- GB-A- 1 414 678
- US-A1- 2002 028 288
- US-B1- 6 231 343
- YANG ET AL: "Influence of saliva contamination on zirconia ceramic bonding" DENTAL MATERIALS, ELSEVIER LNKD- DOI:10.1016/J.DENTAL.2007.04.013, Bd. 24, Nr. 4, 11. Februar 2008 (2008-02-11), Seiten 508-513, XP022476060 ISSN: 0109-5641

## Beschreibung

Die vorliegende Erfindung betrifft die Verwendung eine Zusammensetzung zur Reinigung vom Metall- oder Keramikoberflächen, insbesondere Oberflächen von Dentalrestaurationen oder Implantatabutments.

Dentalrestaurationen oder Implantatabutments bestehen häufig aus keramischen Materialien oder aus Metallen, welche auf verschiedene Weisen an Zahndefekte angepasst werden können. Die Restauration wird zur Kontrolle der Passung im Allgemeinen vor Befestigung in die Kavität eingesetzt ("try―in"). Hierbei ist auch bei Einsatz eines Kofferdamms eine Kontamination mit proteinhaltigen Körperflüssigkeiten, wie etwa Speichel, Dentinliquor, Sulkusfluid, Blut, nahezu unvermeidbar. Die Proteine werden auf allen klinisch gängigen Keramiken und Metallen durch starke ionische bis teilkovalente Wechselwirkungen adsorbiert. Bei anschließender adhäsiven Befestigung mittels üblichen Haftvermittlern ("Primern") und radikalisch härtenden Befestigungszementen und -kompositen führen solche Proteinkontaminationen zu einer deutlichen Schwächung der Verbundwirkung zwischen Restaurationsmaterial und Zement oder Komposit.

Die Problematik der Proteinverschmutzung ist Gegenstand einiger wissenschaftlicher Veröffentlichungen, die auch verschiedene Lösungsmöglichkeiten diskutieren. B. Yang, M. Kern, Dental Materials, 2008, 24, 508-513 beschreiben das Sandstrahlen mit A1₂O₃―Partikeln zum Entfernen von Speichelverunreinigungen.

Y. Aboush, J. Prosth. Dent., 1998, 80(6), 649, empfehlen die Reinigung von Porzellanoberflächen mit Phosphorsäure.

A. Quaas, M. Kern, Dental Materials, 2007, 23, 506-512, vergleichen das Sandstrahlen mit A1₂O₃―Partikeln und die Behandlung mit 37% iger Phosphorsäure oder mit Isopropanol zur Beseitigung von Speichelkontaminationen. Das Sandstrahlen erwies sich zur Reinigung von Zirkonoxidkeramik als am wirksamsten. B. Yang, M. Kern, J. Dent. Res., 2007, 86(8), 749―753 kommen zu vergleichbaren Ergebnissen.

T. Bock, U. Salz, IAD Conference, 2008, Xi'An (CN)) erreichten eine maximale Bindungsstärke an ZrO₂ nach Reinigung mit 2 % NaOCl.

Es zeigte sich aber, dass auf Metalloxiden und Nichtedelmetallen die Phosphorsäurereinigung eine Abnahme der Verbundstärke gegenüber nicht-kontaminierten, nicht-gereinigten Referenzproben herbeiführt. Auch können Proteinadsorbate vor der adhäsiven Befestigung von Restaurationsmaterialien mit den bislang erhältlichen nicht-abrasiven mechanischen Methoden (z.B. Wasserstrahl, Polierbürsten, Ultraschallbad) nicht vollständig entfernt werden. Selbst die kombinierte Anwendung mechanischer Reinigungsmethoden mit den verfügbaren Reinigungsmitteln, wie z.B. Detergenzlösungen und zahnmedizinischen Polierpasten, Lösemitteln, wie Benzin, Ethanol oder Aceton, Säuren, Laugen, Oxidationsmitteln, wie Harnstoffperoxid, Hypochlorit oder Wasserstoffperoxid, oder Solubilisierungshilfen, wie Harnstoff, führen zu keiner nennenswerten Verbesserung der Haftwerte.

Die einzige literaturbekannte Methode zur effektiven Reinigung proteinkontaminierter dentalkeramischer und metallischer Oberflächen ist das Abstrahlen mit abrasiven Strahlmitteln (wie z.B. Korund). Der bei dieser Methode auftretende Oberflächenabtrag entfernt alle adsorbierten Verunreinigungen und ermöglicht so einen zu unkontaminierten Oberflächen vergleichbaren Verbund. Nachteilig ist allerdings die durch den Abtrag negativ beeinflusste Passung der Restauration, die Unverträglichkeit mit abrasionsempfindlichen Verblendmaterialien, die unvermeidliche Beschädigung filigraner Übergänge, die mangelnde Verfügbarkeit geeigneter Geräte in zahnärztlichen Praxen und die kaum mögliche intraorale Anwendbarkeit. Daher ist das Sandstrahlen für klinische Situationen nur bedingt geeignet.

Aufgabe der vorliegenden Erfindung ist es, im Rahmen einer adhäsiven Befestigung von dentalen Restaurationsmaterialien eine Zusammensetzung zur nicht-abrasiven Reinigung der Oberflächen der Restaurationsmaterialien, insbesondere zur Entfernung von Proteinverunreinigungen bereitzustellen, welche die Nachteile des Standes der Technik nicht aufweist. Die Reinigungszusammensetzung gungszusammensetzung sollte einfach und mit der üblichen apparativen Ausrüstung des Zahnarztes oder Zahntechnikers anzuwenden sein, keine toxischen Chemikalien benötigen und keine negative Auswirkungen auf Passung unterschiedlicher Restaurationsmaterialien haben. Vorteilhaft wäre auch die Anwendbarkeit ein und derselben Reinigungszusammensetzung auf unterschiedlichen Restaurationsmaterialien.

Gelöst wird die Aufgabe durch die Verwendung einer Zusammensetzung, enthaltend ein Trägermedium und Partikel auf der Basis einer Metallverbindung mit einem gewichtsmittleren Teilchendurchmesser von 1 nm bis 500 nm zur Reinigung von Oberflächen aus Metall oder Keramik, wobei die Form der Teilchen sphärisch, faserartig oder nanofibrillär, typischerweise mit einem Aspektverhältnis von 10 - 10.000, sein kann. Bevorzugt sind sphärische Teilchen.

Die Erfindung richtet sich auch auf ein Verfahren zur Reinigung einer Oberfläche aus Metall oder Keramik, umfassend das In-Berührung-Bringen der Oberfläche mit der obigen Reinigungszusammensetzung und Bewegen der Reinigungszusammensetzung auf der Oberfläche.

Die erfindungsgemäß verwendete Reinigungszusammensetzung enthält ein Trägermedium und Partikel auf der Basis einer Metallverbindung mit einem gewichtsmittleren Teilchendurchmesser von 1 nm bis 500 nm, im Folgenden auch als "Reinigungspartikel" bezeichnet.

Die einzelnen Partikel haben Teilchendurchmesser von 1 nm bis 500 nm, bevorzugt von 1 bis 300 nm und besonders bevorzugt von 1 bis 200 nm. Ganz besonders bevorzugt sind Nanopartikel mit Teilchengrößen von 1 bis 100 nm und am meisten bevorzugt von 1 bis 50 nm.

Erfindungsgemäß werden vorzugsweise sphärische Teilchen verwendet. "Sphärisch" bedeutet hierin, dass die Partikel einen Durchmesser in jeder Richtung aufweisen, der um maximal 10 % von einem Durchmesser in einer anderen Richtung abweicht. Bei nicht-sphärischen Teilchen wird unter dem Teilchendurchmesser der Äquivalentdurchmesser (oberflächenäquivalenter Kugeldurchmesser) verstanden. Der oberflächenäquivalente Kugeldurchmesser ist der Durchmesser einer Kugel, die dieselbe Oberfläche besitzt wie das untersuchte Teilchen. Die Begriffe Teilchendurchmesser und Teilchengröße werden hierin synonym gebraucht. Die Reinigungspartikel können porös oder vorzugsweise nichtporös sein.

Im Fall von agglomerierten oder aggregierten Partikeln gelten die obigen Angaben für die Agglomerate bzw. Aggregate.

Die Reinigungspartikel haben einen gewichtsmittleren Durchmesser im Bereich von 1 nm bis 500 nm, bevorzugt von 1 nm bis 100 nm, ganz besonders bevorzugt von 1 bis 50 nm und am meisten bevorzugt von 2 bis 25 nm. Die Teilchengrößenbestimmung erfolgt, wenn nicht anders angegeben, durch dynamische Lichtstreuung.

Die Reinigungspartikel der vorliegenden Erfindung bestehen aus einer Metallverbindung, worin das Metall vorzugsweise aus Metallen der 3. Hauptgruppe, wie etwa Aluminium; Nebengruppenmetallen, wie etwa Scandium, Yttrium, Titan und Zirconium, und Lanthanoiden, wie etwa Ytterbium und Cer, ausgewählt ist. Es können auch Mischungen von Metallverbindungen eingesetzt werden. Die bevorzugten Metallverbindungen sind Verbindungen des Aluminiums, Titans, Zirconiums und deren Mischungen, wobei Zirconiumverbindungen besonders bevorzugt sind.

Unter Metallverbindungen werden insbesondere Metalloxide, anorganische und organische Metallsalze verstanden. Die Metallverbindungen sind vorzugsweise aus Metallchalkogeniden, insbesondere Metalloxiden; Metallhalogeniden, wie etwa den Fluoriden, Chloriden, Bromiden und Iodiden; Metallchalkogenohalogeniden, insbesondere Metalloxyhalogeniden , z.B. Oxychloriden; Metallpseudohalogeniden, insbesondere Metallisocyanen; Metallsiliciumchalkogeniden; Metallhydoxiden; Metalloxidhydroxiden, Metallnitraten, Metalloxynitraten und deren Mischungen ausgewählt. Typische organische Metallsalze sind Monocarbonsäuresalze, z.B. Acetate, Formiate, Nitrilotriacetate, Ethylendiamintetraacetate; Chelatkomplexe, z.B. Acetylacetonato-, Gluconato-, Fumarato-, Tatrato-, Citrato und Iminodisuccinato-Komplexe.

Beispielhafte Metallverbindungen der Partikel umfassen Aluminiumoxid, Aluminiumoxidhydroxid (z.B. γ-A10 (OH) (Böhmit)), Zirconiumdioxid, Titandioxid (z.B. Rutil), Zirkonylchlorid, Titannitrat und Zirkonylnitrat, wobei Aluminiumoxid, Aluminiumoxidhydroxid, Zirconiumdioxid, Titandioxid und deren Mischungen bevorzugt sind.

Das Material und die Morphologie der Reinigungspartikel werden vorzugsweise so ausgewählt, dass sie in Bezug auf die zu reinigende Oberfläche keine oder nur geringe abrasive Wirkung zeigen.

Das Trägermedium der erfindungsgemäßen Reinigungszusammensetzung kann ein flüssiges oder festes Medium sein.

Vorzugsweise ist das Medium eine Flüssigkeit, besonders bevorzugt Wasser, einschließlich wässrigen Lösungen; ein organisches Lösemittel, einschließlich Mischungen von organischen Lösemitteln, oder eine Mischung aus Wasser und organischem(n) Lösemittel(n). Wässrige Lösungen umfassen auch Lösungen von Säuren, Laugen und Puffern mit einem pH-Wert von 0 bis 14, bevorzugt von 7 bis 14. Beispiele für geeignete organische Lösemittel umfassen aliphatische und cycloaliphatische C₂--― bis C₈―Alkohole, aliphatische und cycloaliphatische Ketone, z.B. Aceton und Methylethylketon; aliphatische und cycloaliphatische Ether, z.B. Di-t-butylether, Methyl-t-butylether, Dioxan, Dioxolan und Dioxol; Sulfoxide, z.B. Dimethylsulfoxid; Amide und Lactame, z.B. N-Methylpyrrolidon; Ester, z.B. i-Amylpropionat, Ethylacetat und Butylacetat. Die Reinigungspartikel sind in dem flüssigen Medium dispergiert.

Feste Trägermedien können beispielsweise angewendet werden in fibrillärer Form (wie z.B. Gewebe, Borsten, Bürsten, Vliese, Filze, Streifen, Fasern oder Mikrofasern), in monolithischer und nicht-monolithischer Form (wie z.B. Blöcke, Scheiben, Schwämme (Schäume) und sphärischer Körper). Ferner können zur Anwendung kommen partikelhaltige heterogene Phasen oder beschichtete Festkörper, wie etwa das für dentalmedizinische Behandlungen übliche Bicarbonatpulver, z.B. Clean Jet, Fa. Hager Werke. Unter partikelhaltigen heterogenen Phasen werden beispielsweise Dispersionen der erfindungsgemäß verwendeten Reinigungspartikel in einer Polymermatrix verstanden.

Als feste Medien können polymere Verbindungen verwendet werden (wie z.B. Polyolefine, Polyvinylverbindungen, Polymethacrylate, Polyacrylate, Polyester, Polyamide, Polyimide, Polyetherimide, Polyaramide, Polyurethane, Polyether, Polyamine, Polyharnstoffe, Polysaccaride, Polysiloxane und hochmolekulare Proteine wie Kollagen), sowie Blends derselben. Bevorzugt sind Polyolefine, Polyamide, Polyester, Polysiloxane und Polyurethane. Die festen Medien können ihrerseits in partikulärer Form vorliegen.

Die Reinigungspartikel können auf das feste Medium beispielsweise als Beschichtung, typischerweise mit einer Schichtdicke von 0,1 ― 50 µm, aufgebracht oder darin dispergiert sein.

Beispiele für feste Reinigungszusammensetzungen umfassen extrudierte Bürstenfasern z.B. aus schmelzkompoundierten Thermoplasten mit darin dispergierten oder vorzugsweise darauf asorbierten Reinigungspartikeln oder partikelfreisetztende Schwämme die man durch Dispergieren von Reinigungspartikeln in geeigneten Monomeren und anschließende Schaumherstellung (z.B. Polyurethanschäume) erhält.

Die erfindungsgemäß verwendete Reinigungszusammensetzung kann optional weitere Bestandteile enthalten, wie in Dentalprophylaxe und -medizin übliche Abrasionsmittel, wie z.B. Silica-, Bicarbonat- und Polymerpartikel, Netzmittel, Flotationshilfen, Detergenzien, wie z.B. nichtionische, anionische und kationische Verbindungen, bevorzugt nichtionische und kationische Verbindungen, Entschäumer, Stabilisatoren und weitere Hilfsmittel, wie etwa antimikrobielle Zusätze, Duftstoffe, Geschmacksstoffe, Farbstoffe, Bleichmittel und Konservierungsmittel. Bei Einsatz von flüssigen Trägermedien kann die erfindungsgemäße Reinigungszusammensetzung ferner optional polymere Verdikkungsmittel, wie z.B. geeignet lösliche Polyvinylverbindungen, Polymethacrylate, Polyacrylate, Polyether, Polyamine, Polysilicate, und Polysaccharide, sowie Thixotropieagenzien und Rheologiemodifizierer wie Silicatpartikel, Schichtsilicate, Aluminate und Hydrotalcite enthalten. Bevorzugte Hilfsstoffe sind nichtionische oder kationische Detergenzien, Netzmittel, Duftstoffe, Farbstoffe und Konservierungsstoffe.

Vorzugsweise enthält die erfindungsgemäß verwendete Reinigungszusammensetzung mit flüssigem oder festem Trägermedium die Reinigungspartikel in einer Menge von 1 bis 75 Gew.―%, bevorzugt 1 bis 50 Gew.―% , besonders bevorzugt 5 bis 35 Gew.―% im Falle eines flüssigen Trägermediums und am meisten bevorzugt 10 bis 30 Gew.―% im Falle eines flüssigen Trägermediums, bzw. besonders bevorzugt 1 bis 25 Gew.―% im Falle eines festen Trägermediums, jeweils bezogen auf das Gesamtgewicht der Zusammensetzung.

Besonders bevorzugt sind Zusammensetzungen, die keine Partikel mit einer Größe von mehr als 500 nm, besonders bevorzugt mehr als 250 nm enthalten.

Das flüssige Trägermedium ist vorzugsweise in der Reinigungszusammensetzung in einer Menge von 25 bis 99 Gew.―%, bevorzugt 50 bis 99 Gew.―%, besonders bevorzugt 65 bis 95 Gew.―%, und am meisten bevorzugt 70 bis 90 Gew.―%, jeweils bezogen auf das Gesamtgewicht der Zusammensetzung, enthalten. Das feste Trägermedium ist vorzugsweise in der Reinigungszusammensetzung in einer Menge von 25 bis 99 Gew.―%, bevorzugt 50 bis 99 Gew.―% und besonders bevorzugt 75 bis 99 Gew.―%, jeweils bezogen auf das Gesamtgewicht der Zusammensetzung, enthalten. Die optionalen Bestandteile sind vorzugsweise in einer Menge von 0 bis 5 Gew.―% oder 0,001 bis 5 Gew.―%, besonders bevorzugt 0 bis 2,5 Gew.-% oder 0,001 bis 2,5 Gew.―%, und am meisten bevorzugt von 0 bis 1 Gew.-% oder 0,001 bis 1 Gew.―% enthalten.

Eine beispielhafte Reinigungszusammensetzung mit flüssigem Trägermaterial enthält:
(i) 5 bis 35 Gew.-%, bevorzugt 10 bis 30 Gew.―% Partikel mit einem gewichtsmittleren Teilchendurchmesser von 1 bis 100 nm auf Basis einer Metallverbindung, die aus Aluminiumoxid, Aluminiumoxidhydroxid, Zirconiumdioxid, Titandioxid und deren Mischungen ausgewählt ist,
(ii) 65 bis 95 Gew.―%, bevorzugt 70 bis 90 Gew.―% Wasser oder ein wässrige Lösung mit einem pH-Wert im Bereich von 7 bis 14, und
(iii) 0 bis 5 Gew.-%, bevorzugt 0 bis 2,5 Gew.―% optionale Bestandteile, vorzugsweise ausgewählt aus Detergenzien, Netzmitteln, Duftstoffen, Farbstoffen und Konservierungsstoffen.

In einigen Ausführungsformen ist die erfindungsgemäß verwendete Reinigungszusammensetzung frei von Detergenzien und/oder frei von Duftstoffen, Farbstoffen, Netzmitteln und/oder Bleichmitteln.

Es ist aus Gründen einer leichten Anwendung vorteilhaft, wenn die erfindungsgemäß verwendete Reinigungszusammensetzung gelförmig ist, wie entweder bereits durch die Wechselwirkung der einzelnen Komponenten gegeben oder gegebenenfalls durch Zugabe geeigneter Verdickungsmittel bewerkstelligt werden kann.

Grundsätzlich ist die erfindungsgemäß verwendete Reinigungszusammensetzung zur Reinigung aller Oberflächen aus Metall oder Keramik, wie etwa Oxid- und Silicatkeramik, geeignet; bevorzugt wird sie jedoch zur Reinigung von Oberflächen aus dentalmedizinisch eingesetzten Materialien verwendet, d.h. Materialien, die als Dentalrestaurationsmaterialien klinisch gängig sind, z.B. dentalen Metallen wie Titan, Gold, Metallen der Platingruppe sowie deren Legierungen und Chrom-Cobalt-Legierungen; dentalen Keramiken wie Zirconiumdioxidkeramik, Aluminiumoxidkeramik und Silicatkeramiken, z.B. Lithium-Disilicat-Glaskeramik, Leucit-Glaskeramik, Leucit-Apatit-Glaskeramik und Feldspatkeramik.

Es hat sich gezeigt, das die erfindungsgemäß verwendete Reinigungszusammensetzung besonders zur Reinigung von Oberflächen geeignet ist, die mit Proteinen verunreinigt sind. Die Proteine können beispielsweise aus Körperflüssigkeiten, wie etwa Speichel, Dentinliquor, Sulkusfluid und Blut, stammen. Die Reinigungszusammensetzung wird insbesondere zur Entfernung von Speichelverunreinigungen verwendet, insbesondere zur Entfernung von Speichelproteinen wie etwa phosphorhaltigen Speichelproteinen. Da die erfindungsgemäße Reinigungszusammensetzung selbst stark anhaftende Proteinschichten ("Proteinadsorbate") entfernt, ist sie besonders zur Reinigung von Dentalrestaurationen und Implantatabutments geeignet, wie etwa zur Reinigung von Inlays, Onlays, Kronen, Brücken, Suprakonstruktionen und Abutments, aber auch zur Reinigung von Zahnhartsubstanz. Die Dentalrestaurationen oder Implantatabutments weisen selbst nach einer nur kurzen Einführung in die Mundhöhle zur Kontrolle der Passung bereits Proteinverschmutzungen auf, die ohne Entfernung eine erhebliche Beeinträchtigung des anschließend hergestellten Verbunds zur Folge hätten. Vorzugsweise wird die erfindungsgemäße Reinigungszusammensetzung unmittelbar nach der Anprobe verwendet. Die Zusammensetzungen eignen sich auch zur Reinigung des präparierten Zahns und Implantaten, die als Träger für Dentalrestaurationen dienen, hier insbesondere freiliegenden Teilen von Implantaten.

Es wird vermutet, dass Proteine aus Körperflüssigkeiten, insbesondere aus Speichel, die einen relativ hohen Phosphorylierungsgrad aufweisen, aufgrund ihrer Phosphatgruppen gut auf den Oberflächen der gängigen Restaurationsmaterialien haften und dass die Partikel der erfindungsgemäßen Reinigungszusammensetzungen aufgrund ihrer großen Oberfläche starke Wechselwirkungen mit eben diesen Phosphatgruppen eingehen können, so dass die Proteine letztendlich an die Partikel "gebunden" und von der zu reinigenden Oberfläche entfernt werden. Dabei umfasst der Begriff "Bindung" an die Partikel sowohl rein physikalische Adsorption, ionische Bindung als auch zumindest teilkovalente Bindung. Die Reinigungswirkung beruht daher nicht auf einer abrasiven Wirkung der Partikel, was experimentell bestätigt werden konnte.

Das Verfahren zur Reinigung der Oberfläche aus Metall oder Keramik, einschließlich der oben beschriebenen bevorzugten Oberflächen, erfolgt typischerweise durch In-Berührung-Bringen der Oberfläche mit der oben beschriebenen Reinigungszusammensetzung, einschließlich bevorzugten Ausführungsformen, und Bewegen der Reinigungszusammensetzung auf der Oberfläche, z.B. durch Verteilen auf der Oberfläche ("Verreiben") mithilfe eines geeigneten Instruments wie etwa eines Pinsels oder bei zu reinigenden Oberflächen von kleinen Gegenständen auch durch Rühren des Gegenstandes in einer flüssigen Reinigungszusammensetzung. Optional kann sich eine weiterer Schritt des Ruhenlassen der Reinigungszusammensetzung auf der Oberfläche anschließen. Abschließend wird die Reinigungszusammensetzung entfernt, z.B. durch Abspülen mit Wasser und Trocknen der Oberfläche mit Druckluft. Die Dauer des bewegten Reinigungsschrittes beträgt vorzugsweise 10 bis 60 s, besonders bevorzugt 10 bis 30 s. Die Dauer des Ruhenlassens beträgt vorzugsweise 5 bis 45 s, besonders bevorzugt 5 bis 25 s.

Die vorliegende Erfindung betrifft die Verwendung der Reinigungszusammensetzung zur Reinigung einer Dentalrestauration oder einer Implantatabutments. Betrachtet man das gesamte Verfahren zur Restauration eines Zahn unter Verwendung eines erfindungsgemäßen Reinigungsschritt, so umfasst dieses vorzugsweise die Schritte:
(a) Einsetzen einer Dentalrestauration in eine Zahnkavität, auf einen Zahnstumpf oder auf ein Implantantabutment zur Überprüfung der Passgenauigkeit,
(b) Entnahme der Dentalrestauration aus der Mundhöhle,
(c) Reinigen der Dentalrestauration und/oder intraorale Reinigung des Implantatabutments mit der erfindungsgemä-βen Reinigungszusammensetzung wie oben beschrieben, vorzugsweise durch Verreiben der Reinigungszusammensetzung auf der Dentalrestauration oder dem Implantatabutment mit einem Pinsel, Ruhenlassen der Reinigungszusammensetzung, Abspülen der Reinigungszusammensetzung mit destilliertem Wasser und Trocknen der Dentalrestauration oder des Implantatabutments mit Druckluft, und
(d) adhäsive Befestigung der Dentalrestauration in der Mundhöhle in der Zahnkavität, auf dem Zahnstumpf oder auf dem Implantatabutment.

Dabei erfolgt die adhäsive Befestigung der Dentalrestauration typischerweise mittels üblichen Haftvermittlern ("Primern") und radikalisch härtenden Befestigungszementen und -kompositen; es ist jedoch auch eine adhäsive Befestigung ohne Anwendung von Pimern möglich. Geeignete Befestigungszemente, -komposite und Primer sind aus dem Stand der Technik bekannt und beispielsweise in Resin-ceramic bonding: a review of the literature: M. Blatz, A. Sadan, M. Kern; J Prosthet Dent 2003;89:268-74; Effect of primer treatment on bonding of resin cements to zirconia ceramic: S. Kitayamaa, T. Nikaidoa, R. Takahashia, L. Zhua, M. Ikedac, R. Foxtond, A. Sadrb, J. Tagamia, Dent. Mat. 2009,Article in Press beschrieben.

Die vorliegende Erfindung wird nun im Folgenden anhand von Beispielen näher erläutert.

### Beispiel 1

*Herstellung der erfindungsgemäß verwendeten Reinigungszusammensetzungen*

Die in Tabelle 1 angegebenen Reinigungszusammensetzungen wurden hergestellt, indem die Komponenten in ein Gefäß eingewogen und durch ca. 10-minütige Einwirkung eines Ultraschalldispergiergerätes (UP200S; Firma Hielscher Ultraschalltechnik, Teltow, Deutschland) vermischt wurden.

**Tabelle 1: Reinigungszusammensetzungen**

| **Zusammensetzung** | **Reinigungspartikel (20 g)** | **Trägermedium (80 g)** | **Aussehen** |
|---|---|---|---|
| ERM-I | Böhmit-Pulver¹⁾ (25 nm) | dest. Wasser | leicht opakes, stark thixotropes Gel |
| ERM-II | ZrO₂-Pulver²⁾ (12±3 nm) | 1 M NaOH, pH 14 | weiß-opak, schwach thixotrope, sedimentationsstabile Dispersion |
| ERM-III | ZrO₂-Pulver²⁾ (12±3 nm) | Borsäure-Natronlauge-Pufferlösung, pH 11 | weiß-opak, schwach thixotrope, sedimentationsstabile Dispersion |
| ERM-IV | ZrO₂-Pulver²⁾ (12±3 nm) | Natriumtetraborat-Natronlauge-Puffer-lösung, pH 10 | weiß-opak, schwach thixotrope, sedimentationsstabile Dispersion |
| ERM-V | ZrO₂-Pulver²⁾ (12±3 nm) | Tris-Acetat-Puffer-lösung, pH 8 | weiß-opak, schwach thixotrope, sedimentationsstabile Dispersion |
| ERM-VI | Rutil-Pulver³⁾ (10-30 nm) | 1M NaOH, pH 14 | weiß-opak, schwach thixotrope, sedimentationsstabile Dispersion |

| | | | |
|---|---|---|---|
| 1) Disperal P2W, gewichtsmittlere Teilchengröße = 25 nm; Fa. SASOL, Johannesburg, South Africa 2) ZirCOX™ 15, gewichtsmittlere Teilchengröße = 12 ± 3 nm; Fa. IBU-Tec, Weimar, Deutschland 3) nanopartikulärer Rutil, gewichtsmittlere Teilchengröße = 10 - 30 nm, Fa. Io-Li-Tec, Denzlingen, Deutschland | | | |

### Beispiel 2

### Bestimmung der Reinigungswirkung

### a) Probenvorbereitung

In enger Anlehnung an das in Dtsch Zahnärztl Z 1993, 48: 769-772 beschriebene Protokoll wurden quaderförmige Probenkörper aus verschiedenen dentalmedizinisch verwendeten Materialien hergestellt. Die quaderförmigen Probekörper wurden unter Wasserkühlung mit SiC-Schleifpapier der Korngrößen P120 - P400 - P1000 plan geschliffen.

Die einzelnen Substratoberflächen wurden dann gemäß den entsprechenden Herstelleranweisungen wie folgt konditioniert, d.h. silicatische Oberflächen wurden mit Flusssäure geätzt, und oxidische oder metallische Oberflächen mit entsprechender Körnung und Druck sandgestrahlt.

Lithium-Disilicat-Glaskeramik (e.max CAD; Ivoclar Vivadent AG, Schaan, Liechtenstein) wurde für 20 s mit 4,5% Fluorwasserstoffätzgel (Ceramic Etch, Firma Ivoclar Vivadent AG) kontaktiert und anschließend sorgfältig mit destilliertem Wasser abgespült.

Zirconiumdioxidkeramik (ZirCAD; Ivoclar Vivadent AG, Schaan, Liechtenstein), Aluminiumoxidkeramik (Al-Cube; VITA Zahnfabrik, Bad Säckingen, Deutschland) und Reintitan (Tritan; Dentaurum, Ispringen, Deutschland) wurden mit 50 µm Aluoxid-Strahlmittel (Korox 50; BEGO, Deutschland)) bei 2,5 x 105 Pa (2,5 bar) Druck aus ca.1-2 cm Abstand für 15 s angeraut.

Alle Proben wurden anschließend für 10 min in Ethanol in einem Ultraschallbad gereinigt. Nach Entnahme aus dem Ethanol wurden die Proben mit Druckluft trockengeblasen und staubgeschützt bis zum Einsatz aufbewahrt.

### b) Speichelkontamination

Zur Simulation der Speichelkontamination wurden die vorbereiteten Probekörper für 60 s in frischen Humanspeichel gelegt, danach mit destilliertem Wasser für 15 s abgespült und in reichlich Ethanol für 60 s im Ultraschallbad behandelt. Die Proben wurden mit einem Luftbläser getrocknet und wie im Folgenden beschrieben weiterbehandelt.

### c) Reinigungsverfahren

Probenkörper wurden die mit den erfindungsgemäßen Reinigungszusammensetzungen ERM-I bis -VI gereinigt. Zu Vergleichszwekken wurden Probenkörper verwendet, die wie folgt behandelt wurden:

| | |
|---|---|
| REF: | Nicht-kontaminierte Referenzprobe |
| WS: | Probe nach Speichelkontamination für 15 s mit Wasser-strahl gereinigt |
| PSG: | Probe nach Speichelkontamination für 30 s mit 37% Phosphorsäureätzgel (Email Preparator, Ivoclar Viva-dent AG, Liechtenstein) kontaktiert. |
| | |
| PPP: | Probe nach Speichelkontamination mit Polierpaste auf Bimsstein-Basis (Proxyt Polierpaste fein; Ivoclar Vi-vadent AG) behandelt. |
| | |
| NAOH | Probe nach Speichelkontamination mit 1 M NaOH behan-delt. |

Alle erfindungsgemäß verwendeten Reinigungszusammensetzungen ERM-I bis ERM-VI und die Vergleichsmittel PPP und NAOH wurden mit einem kliniküblichen Pinsel (Firma Microbrush; USA) für 10 s auf dem Probekörpers bewegt und dann für 20 s ruhen gelassen. Bei allen durchgeführten Reinigungsverfahren wurden die Mittel anschließend mit einem kliniküblichen Wasserstrahler abgespült und die Probekörper abschließend mit ölfreier Druckluft aus einem kliniküblichen Luftbläser trockengeblasen.

### d) Bestimmung der Haftwerte - Probenvorbereitung

### Methode 1 (mit Primer) :

Die wie oben vorbereiteten Probekörper wurden per Pinsel (Firma Microbrush; USA) mit einem üblichen universellen dentalen Haftvermittler (Monobond Plus Haftvermittler; Ivoclar Vivadent AG, Schaan, Liechtenstein), enthaltend ein phosphatfunktionalisiertes Methacrylat, ein Alkoxysilanmethacrylat und ein Disulfidmethacrylat in alkoholischer Lösung, einmalig satt bestrichen, und die Flüssigkeit wurde 60 s einwirken lassen. Anschließend wurde überstehende Flüssigkeit mit Druckluft abgeblasen. Auf die geprimte Oberfläche wurde, wie in Dtsch Zahnärztl Z 1993, 48: 769-772 beschrieben, eine mit lichtpolymerisierbarem, dentalem Kompositmaterial (Multicore Flow; radikalisch härtender Stumpfaufbaukomposit, Ivoclar Vivadent AG, Schaan, Liechtenstein) gefüllte Plexiglashülse aufgebracht.

Dazu wurde die Hülse am zu haftenden Ende mit einem Tropfen radikalisch härtendem Befestigungszement (Multilink Automix; Ivoclar Vivadent AG, Schaan, Liechtenstein) belegt und mittels einer Anpressapparatur auf den Probekörper gedrückt. Dann wurde der Zement durch 2 x 20 s Bestrahlung mit einer Polymersationslampe (BluePhase G2; Ivoclar Vivadent AG; Schaan, Liechtenstein) ausgehärtet, und die Proben wurden für 24 h bei 37 °C in Wasser gelagert. Danach wurde die Zughaftung wie unten beschrieben bestimmt.

### Methode 2 (ohne Primer) :

Auf eine ungeprimte Zirconiumdioxidoberfläche wurde, wie in Dtsch Zahnärztl Z 1993, 48: 769-772 beschrieben, eine mit lichtpolymerisierbarem, dentalem Compositematerial (Multicore Flow; radikalisch härtender Stumpfaufbaukomposit, Ivoclar Vivadent AG, Schaan, Liechtenstein) gefüllte Plexiglashülse aufgebracht. Dazu wurde die Hülse am zu haftenden Ende mit einem Tropfen selbstadhäsiven, radikalisch härtenden Befestigungszement (SpeedCem; Ivoclar Vivadent AG, Schaan, Liechtenstein) belegt und mittels einer Anpressapparatur auf den Probekörper gedrückt. Dann wurde der Zement durch 2 x 20 s Bestrahlung mit einer Polymersationslampe (BluePhase G2; Ivoclar Vivadent AG; Schaan, Liechtenstein) ausgehärtet, und die Proben wurden für 24 h bei 37 °C in Wasser gelagert. Danach wurde die Zughaftung wie unten beschrieben bestimmt.

### e) Bestimmung der Haftwerte - Messung der Haftung

Zur Bestimmung der Haftwerte wurde eine Abzugsanordnung angewendet wie sie in der Literatur beschrieben ist (M. Kern, V.P. Thompson, J. Prost. Dent. 1995 73(3): 240-249; M. Kern, V.P. Thompson, "Eine einfache Versuchsanordnung zur universellen Prüfung des Klebeverbundes im axialen Zugtest", Dtsch Zahnärztl Z 1993, 48: 769-772). Die in der Tabelle 2 aufgeführten Ergebnisse wurden mit einer Universal-Test-Maschine Z010 (Zwick-Roell, Ulm, Germany), die baugleich mit der von M. Kern eingesetzten Apparatur ist, bestimmt. Es wurden 7 Einzelproben jeder Gruppe gemessen und der Mittelwert der Zughaftung errechnet.

### f. Ergebnisse

Wie die Tabelle 2 zeigt, führt die Speichelkontamination auch nach Wasserreinigung (Gruppe WS) zur literaturbekannten Schwächung des Verbundes gegenüber unkontaminierten Referenzen (Gruppe REF).

Der Erfolg einer Reinigung mit 37% Phosphorsäure-Gel (PSG) war substratabhängig: während die Silicat-Keramik (Lithium-Disilicat-Glaskeramik) aus Gruppe PSG einen zu Gruppe REF vergleichbaren Haftwert aufwies, erreichte der Verbund zur Zirkondioxidkeramik nur die Hälfte des Originalwertes aus Gruppe REF. Das Verfahren eignet sich demnach nicht für alle Substrate, was die universelle Anwendbarkeit dieses Verfahrens einschränkt und die Auswahl eines für die jeweilige Oberfläche geeigneten Reinigungsverfahrens durch den Zahnarzt erforderlich macht.

Das in Gruppe PPP untersuchte Behandeln der Keramik mit Polierpaste auf Bimsstein-Basis war hinsichtlich der erzielten Haftwerte nicht effektiv. Es gelang auf keinem der untersuchten Substrate, die Haftwerte im Vergleich zur kontaminierten Gruppe WS signifikant zu steigern.

Die Behandlung mit ERM-I führte im Vergleich zur Gruppe WS zu einer signifikanten Steigerung der Haftwerte. Wie durch Rasterelektronmikroskopie (REM) belegt wurde, üben die Partikel keine feststellbare Abrasionswirkung aus. Die in Gruppe REF erreichten Haftwerte wurden auf allen Oberflächen im Rahmen der Messgenauigkeit von Gruppe ERM-I wieder erreicht. ERM-I stellt daher ein hinsichtlich der Verbundfestigkeit effektives Mittel zur Reinigung proteinkontaminierter silicat- und oxidkeramischer sowie metallischer Restaurationen bei einer adhäsiven Befestigungstherapie dar.

**Tabelle 2: Zughaftwerte auf speichelkontaminierten Restaurationsmaterial nach verschiedenen Reinigungsverfahren**

| **Reinigungsverfahren** | **Substrat** | **Methode zur Herstellung des Prüfkörpers** | **Zughaftung [MPa]** |
|---|---|---|---|
| REF*) | Zirconiumdioxid | 1 | 52,1 ± 10,9 |
| | | 2 | 42 ± 19,6 |
| | Lithium-Disilicat-Glaskeramik | 1 | 55,9 ± 9,2 |
| | Reintitan | | 31,5 ± 5,6 |
| | Aluminiumoxid | | 39,4 ± 11,3 |
| WS*) | Zirconiumdioxid | 1 | 15,8 ± 16,1 |
| | | 2 | 1,4 ± 2,1 |
| | Lithium-Disilicat-Glaskeramik | 1 | 21 ± 13,6 |
| | Reintitan | | 2,5 ± 1,9 |
| | Aluminiumoxid | | 9,8 ± 2,7 |
| PSG*) | Zirconiumdioxid | 1 | 26,7 ± 11,8 |
| | Lithium-Disilicat-Glaskeramik | | 40,6 ± 10,7 |
| PPP*) | Zirconiumdioxid | 1 | 21,9 ± 14,2 |
| | Lithium-Disilicat-Glaskeramik | | 29,7 ± 15,2 |
| NAOH*) | Zirconiumdioxid | 1 | 34,8 ± 18,4 |
| | Lithium-Disilicat-Glaskeramik | | 30,2 ± 8,4 |
| ERM-I | Zirconiumdioxid | 1 | 43,9 ± 8,4 |
| | Lithium-Disilicat-Glaskeramik | | 46,0 ± 7,4 |
| | Reintitan | | 28,2 ± 8,7 |
| | Aluminiumoxid | | 50,5 ± 7,2 |
| ERM-II | Zirconiumdioxid | 1 | 63,1 ± 11,6 |
| | | 2 | 42,5 ± 9,4 |
| | Lithium-Disilicat-Glaskeramik | 1 | 54,6 ± 11,9 |
| | Reintitan | | 27,9 ± 8,6 |
| | Aluminiumoxid | | 45,8 ± 10 |
| ERM-III | Zirconiumdioxid | 1 | 55,4 ± 6,1 |
| | Lithium-Disilicat-Glaskeramik | | 51,2 ± 7,5 |
| ERM-IV | Zirconiumdioxid | 1 | 46,7 ± 16,6 |
| | Lithium-Disilicat-Glaskeramik | | 48,7 ± 10,3 |
| ERM-V | Zirconiumdioxid | 1 | 33,8 ± 9,7 |
| | Lithium-Disilicat-Glaskeramik | | 35,2 ± 9,8 |
| ERM-VI | Zirconiumdioxid | 1 | 43,5 ± 9,9 |
| | Lithium-Disilicat-Glaskeramik | | 50,1 ± 6,9 |

| | | | |
|---|---|---|---|
| *) Vergleichsbeispiele | | | |

ERM-II war auf beiden Keramiken statistisch signifikant wirksam und ergab mit den Initialwerten REF vergleichbare Verbundstärken. Wie durch Rasterelektronmikroskopie (REM) belegt wurde, üben die Partikel keine feststellbare Abrasionswirkung aus. Trotzdem wurden überraschenderweise die Haftwerte nach

Reinigung mit ERM-II wie die Tabelle 2 zeigt wieder vollständig hergestellt. ERM-II stellt daher ein hinsichtlich Verbundfestigkeit effektives Mittel zur Reinigung proteinkontaminierter silicat- und oxidkeramischer sowie metallischer Restaurationen bei einer adhäsiven Befestigungstherapie dar.

Die bei pH 11 durchgeführten Versuche in Gruppe ERM-III zeigte die Wirksamkeit von ERM-III auf beiden Keramiktypen. Die in Gruppe ERM-III erreichten Haftwerte entsprechen im Rahmen der Messgenauigkeit den Initialwerten der Gruppe REF. Wie durch Rasterelektronmikroskopie (REM) belegt wurde, üben die Partikel keine feststellbare Abrasionswirkung aus. Trotzdem wurden überraschenderweise die Haftwerte nach Reinigung mit ERM-III wie die Tabelle zeigt wieder vollständig hergestellt. Auch die in Gruppe PSG demonstrierte Wirksamkeit von Phosphorsäure auf Silicatkeramik wurde erreicht, so dass ERM-III ein der Literaturreferenz vergleichbares, aber substratunabhängiges Reinigungsmittel darstellt.

Die bei pH 10 durchgeführten Versuche in Gruppe ERM-IV zeigten die Wirksamkeit von ERM-IV auf beiden Keramiktypen. Die in Gruppe ERM-IV erreichten Haftwerte entsprechen im Rahmen der Messgenauigkeit den Initialwerten der Gruppe REF. Wie durch Rasterelektronmikroskopie (REM) belegt wurde, üben die Partikel keine feststellbare Abrasionswirkung aus. Trotzdem wurden überraschenderweise die Haftwerte nach Reinigung mit ERM-IV wie die Tabelle zeigt wieder vollständig hergestellt. Auch erreichte ERM-IV die in Gruppe PSG demonstrierte Wirksamkeit von Phosphorsäure auf Silicatkeramik. Daher stellt ERM-IV ein der Literaturreferenz vergleichbares, jedoch substratununabhängiges Reinigungsmittel dar.

Die bei pH 8 durchgeführten Versuche in Gruppe ERM-V zeigten die Wirksamkeit von ERM-V auf beiden Keramiktypen. Wie durch Rasterelektronmikroskopie (REM) belegt wurde, üben die Partikel keine feststellbare Abrasionswirkung aus. Zwar stellte die Reinigung mit ERM-V wie die Tabelle zeigt die Haftwerte verglichen mit Gruppe REF nicht vollständig her, aber die Verbundfestigkeit liegt deutlich über der der lediglich wassergereinigten Proben der Gruppe WS. Daher stellt ERM-V ein substratununabhängiges Reinigungsmittel dar.

Die Versuche der Gruppe ERM-VI zeigten die substratunabhängige Wirksamkeit von ERM-VI auf beiden Keramiktypen. Wie durch Rasterelektronmikroskopie (REM) belegt wurde, üben die hier eingesetzten Partikel keine feststellbare Abrasionswirkung aus. Trotzdem wurden überraschenderweise die Haftwerte nach Reinigung mit ERM-VI wie die Tabelle zeigt wieder vollständig hergestellt und entsprechen im Rahmen der Messgenauigkeit den Initialwerten der Gruppe REF. Die in Gruppe PSG demonstrierte Wirksamkeit von Phosphorsäure auf Silicatkeramik wurde erreicht, so dass ERM-VI ein der Literaturreferenz vergleichbares, aber substratununabhängiges Reinigungsmittel darstellt.

Der mit reiner Natronlauge, ohne nanopartikuläre Komponente durchgeführte Versuch der Gruppe NAOH zeigte eine deutlich niedrigere Wirksamkeit auf beiden Keramiktypen. Die Haftwerte der Gruppe NAOH sind deutlich niedriger als die Initialwerte der Gruppe REF. Bedenkt man, dass Gruppe ERM-II bei gleichem pH eine sehr hohe Reinigungswirkung aufwies, so belegt dies den überraschend positiven Einfluss geeigneter Nanopartikel auf die Oberflächenreinigung.

## Patentansprüche

1. Verwendung einer Zusammensetzung, enthaltend ein Trägermedium und Partikel auf der Basis einer Metallverbindung mit einem gewichtsmittleren Teilchendurchmesser von 1 nm bis 500 nm zur Reinigung von Oberflächen aus Metall oder Keramik, die Teil einer Dentalrestauration oder eines Implantatabutments sind.

2. Verwendung gemäß Anspruch 1, wobei die zu reinigende Oberfläche mit Proteinen, insbesondere Speichelproteinen wie etwa phosphorhaltigen Speichelproteinen, verunreinigt ist.

3. Verwendung gemäß Anspruch 1 oder 2, wobei die zu reinigende Oberfläche aus Metall oder einer Keramik besteht.

4. Verwendung gemäß einem der Ansprüche 1 bis 3, wobei die Reinigung unmittelbar nach der Anprobe der Dentalrestauration erfolgt.

5. Verwendung gemäß einem der Ansprüche 1 bis 4, wobei die Partikel einen gewichtsmittleren Teilchendurchmesser von 1 bis 100 nm, aufweisen.

6. Verwendung gemäß einem der Ansprüche 1 bis 5, wobei das Metall der Metallverbindung aus Metallen der 3. Hauptgruppe, Nebengruppenmetallen und Lanthanoiden ausgewählt ist

7. Verwendung gemäß Anspruch 6, wobei das Metall der Metallverbindung aus Aluminium, Zirconium, Titan, Scandium, Yttrium, Zink, Ytterbium, Cer und deren Kombinationen ausgewählt ist.

8. Verwendung gemäß einem der Ansprüche 1 bis 7, wobei die Metallverbindung aus Metallchalkogeniden, insbesondere Metalloxiden; Metallhalogeniden; Metallchalkogenohalogeniden, insbesondere Metalloxyhalogeniden; Metallpseudohalogeniden, insbesondere Metallisocyanten; Metallsiliciumchalkogeniden; Metallhydroxiden; Metalloxyhydroxiden, Metallnitraten, Metalloxynitraten und deren Mischungen ausgewählt ist.

9. Verwendung gemäß Anspruch 8, wobei die Metallverbindung aus Aluminiumoxid, Aluminiumoxidhydroxid, Zirconiumdioxid, Titandioxid und deren Mischungen ausgewählt ist.

10. Verwendung gemäß einem der Ansprüche 1 bis 9, wobei das Trägermedium eine Flüssigkeit ist.

11. Verwendung gemäß einem der Ansprüche 1 bis 10, wobei die Partikel in einer Menge von 1 bis 50 Gew.-% , bevorzugt 5 bis 35 Gew.-%, jeweils bezogen auf das Gesamtgewicht der Zusammensetzung, vorhanden sind.

12. Verwendung gemäß einem der Ansprüche 1 bis 11, wobei die zu reinigende Oberfläche aus einer Oxidkeramik, insbesondere Zirconiumdioxidkeramik oder Aluminiumoxidkeramik, aus einer Silicatkeramik, insbesondere Lithium-Disilicat-Glaskeramik, aus Titan oder einer Titanlegierung besteht.

13. Verfahren zur extraoralen Reinigung einer Oberfläche einer Dentalrestauration aus Metall oder Keramik, umfassend das In-Berührung-Bringen der Oberfläche mit einer Reinigungszusammensetzung wie in einem der Ansprüche 1 oder 5 bis 11 beschrieben und Bewegen der Reinigungszusammensetzung auf der Oberfläche.

14. Verfahren gemäß Anspruch 13, wobei die zu reinigende Oberfläche wie in einem der Ansprüche 2 bis 3 oder 12 beschrieben definiert ist.

## Claims

1. Use of a composition, comprising a carrier medium and particles based on a metal compound with a weight-average particle diameter of 1 nm to 500 nm, to clean metal or ceramic surfaces that are part of a dental restoration or of an implant abutment.

2. Use according to claim 1, **characterised in that** the surface to be cleaned is contaminated with proteins, in particular saliva proteins such as for example phosphorus-containing saliva proteins.

3. Use according to claim 1 or 2, **characterised in that** the surface to be cleaned consists of metal or a ceramic.

4. Use according to one of claims 1 to 3, **characterised in that** the cleaning takes place immediately after the try-in of the dental restoration.

5. Use according to one of claims 1 to 4, **characterised in that** the particles have a weight-average particle diameter of 1 to 100 nm.

6. Use according to one of claims 1 to 5, **characterised in that** the metal of the metal compound is selected from metals of the 3^{rd} main group, transition metals and lanthanides.

7. Use according to claim 6, **characterised in that** the metal of the metal compound is selected from aluminium, zirconium, titanium, scandium, yttrium, zinc, ytterbium, cerium and combinations thereof.

8. Use according to one of claims 1 to 7, **characterised in that** the metal compound is selected from metal chalcogenides, in particular metal oxides; metal halides; metal chalcogen halides, in particular metal oxyhalides; metal pseudohalides, in particular metal isocyanates; metal-silicon chalcogenides; metal hydroxides; metal oxyhydroxides, metal nitrates, metal oxynitrates and mixtures thereof.

9. Use according to claim 8, **characterised in that** the metal compound is selected from aluminium oxide, aluminium oxide hydroxide, zirconium dioxide, titanium dioxide and mixtures thereof.

10. Use according to one of claims 1 to 9, **characterised in that** the carrier medium is a liquid.

11. Use according to one of claims 1 to 10, **characterised in that** the particles are present in a quantity of 1 to 50 wt %, preferably 5 to 35 wt %, in each case relative to the total weight of the composition.

12. Use according to one of claims 1 to 11, **characterised in that** the surface to be cleaned consists of an oxide ceramic, in particular zirconium dioxide ceramic or aluminium oxide ceramic, of a silicate ceramic, in particular lithium disilicate glass ceramic, of titanium or a titanium alloy.

13. Method of extra-orally cleaning a metal or ceramic surface of a dental restoration, comprising bringing the surface into contact with a cleaning composition as described in one of claims 1 or 5 to 11 and moving the cleaning composition on the surface.

14. Method according to claim 13, **characterised in that** the surface to be cleaned is defined as described in one of claims 2 to 3 or 12.

## Revendications

1. Utilisation d'une composition contenant un milieu servant de véhicule et des particules à base de composé de métal, dotées d'un diamètre moyen en poids de 1 nm à 500 nm, pour nettoyer des surfaces métalliques ou céramiques qui font partie d'une pièce de restauration dentaire ou d'un pilier d'implant.

2. Utilisation conforme à la revendication 1, dans laquelle la surface à nettoyer est souillée de protéines, en particulier de protéines salivaires comme, éventuellement, des protéines salivaires phosphorées.

3. Utilisation conforme à la revendication 1 ou 2, dans laquelle la surface à nettoyer est en un métal ou en une céramique.

4. Utilisation conforme à l'une des revendications 1 à 3, dans laquelle l'opération de nettoyage a lieu immédiatement après l'essayage de la pièce de restauration dentaire.

5. Utilisation conforme à l'une des revendications 1 à 4, dans laquelle les particules présentent un diamètre moyen en poids de 1 nm à 100 nm.

6. Utilisation conforme à l'une des revendications 1 à 5, pour laquelle le métal du composé de métal est choisi parmi les métaux du groupe principal n° 3, les métaux des groupes secondaires et les lanthanoïdes.

7. Utilisation conforme à la revendication 6, pour laquelle le métal du composé de métal est choisi parmi les suivants : aluminium, zirconium, titane, scandium, yttrium, zinc, ytterbium et cérium, ainsi que leurs combinaisons.

8. Utilisation conforme à l'une des revendications 1 à 7, pour laquelle le composé de métal est choisi parmi les chalcogénures, en particulier les oxydes, de métal, les halogénures de métal, les chalcogénohalogénures, en particulier les oxyhalogénures, de métal, les pseudohalogénures, en particulier les isocyanates, de métal, les chalcogénures de métal et de silicium, les hydroxydes de métal, les oxyhydroxydes de métal, les nitrates de métal et les oxy-nitrates de métal, ainsi que les combinaisons de tels composés.

9. Utilisation conforme à la revendication 8, pour laquelle le composé de métal est choisi parmi les suivants : oxyde d'aluminium, oxy-hydroxyde d'aluminium, dioxyde de zirconium et dioxyde de titane, ainsi que leurs mélanges.

10. Utilisation conforme à l'une des revendications 1 à 9, dans laquelle le milieu servant de véhicule est un liquide.

11. Utilisation conforme à l'une des revendications 1 à 10, pour laquelle les particules se trouvent présentes en une proportion de 1 à 50 % et de préférence de 5 à 35 %, dans chaque cas en poids rapporté au poids total de la composition.

12. Utilisation conforme à l'une des revendications 1 à 11, dans laquelle la surface à nettoyer est en une céramique de type oxyde, en particulier une céramique de dioxyde de zirconium ou d'oxyde d'aluminium, en une céramique de silicate, en particulier une vitrocéramique au disilicate de lithium, en titane, ou en un alliage de titane.

13. Procédé de nettoyage extra-buccal d'une surface d'une pièce de restauration dentaire en métal ou en céramique, comprenant le fait de mettre la surface en contact avec une composition de nettoyage décrite dans l'une des revendications 1 et 5 à 11, et le fait de mettre cette composition de nettoyage en mouvement sur cette surface.

14. Procédé conforme à la revendication 13, dans lequel la surface à nettoyer est telle que décrite dans l'une des revendications 2, 3 et 12.
